Europäisches Patentamt

European Patent Office

Office européen des brevets

(11) Numéro de publication: **0 426 584 A1**

## DEMANDE DE BREVET EUROPEEN

(21) Numéro de dépôt: 90420472.4

(51) Int. Cl.5: **H04M 1/08**

(22) Date de dépôt: 31.10.90

(30) Priorité: 03.11.89 FR 8914736

(43) Date de publication de la demande:
08.05.91 Bulletin 91/19

(84) Etats contractants désignés:
CH DE ES FR GB IT LI SE

(71) Demandeur: SEXTANT Avionique
5/7 rue Jeanne Braconnier Parc Tertiaire
F-92366 Meudon la Forêt Cedex(FR)

(72) Inventeur: **Agelet, Juan**
**Roca i Battle 8**
**E-08023 Barcelone(ES)**
Inventeur: **Olivares, Gabriel**
**Llorel 18**
**E-08840 Viledecans(ES)**

(74) Mandataire: **de Beaumont, Michel**
**1bis, rue Champollion**
**F-38000 Grenoble(FR)**

(54) **Dispositif de détection du décrochement d'un combiné téléfonique.**

(57) La présente invention concerne un dispositif de détection du décrochement d'un combiné téléphonique du socle d'un poste téléphonique, comprenant une pièce allongée (8) munie de tétons (11) permettant son pivotement autour d'un axe longitudinal (10) ; une touche (6), constituée d'un prolongement latéral de ladite pièce, et positionnée pour faire saillie à travers la paroi supérieure du socle en position relevée ; un ressort de rappel (15) pour solliciter ladite touche en position relevée ; et un commutateur à bouton-poussoir (12) monté sur ladite pièce dont le bouton (13) glisse sur une surface interne du socle pour passer d'un premier état à un deuxième état quand le combiné est décroché et raccroché.

Fig 3

## DISPOSITIF DE DÉTECTION DU DÉCROCHEMENT D'UN COMBINÉ TÉLÉPHONIQUE

La présente invention concerne le domaine des postes téléphoniques et plus particulièrement un dispositif de détection du décrochement d'un combiné téléphonique.

On constate à l'heure actuelle un effort important de création de formes de postes récepteurs téléphoniques pour les rendre agréables à l'oeil et pour qu'ils s'harmonisent au cadre auquel ils sont destinés.

Ainsi, on voit apparaître depuis quelques années des postes téléphoniques dans lesquels le combiné, au lieu d'actionner des pièces métalliques débordant du socle, vient se poser dans un berceau dont une partie comprend une touche actionnée par le décrochement/raccrochement du combiné pour agir sur un commutateur de prise de ligne.

Par exemple la demande de brevet Australien 25663/88 décrit un commutateur de prise de ligne dont un contact est solitaire du socle et l'autre d'une partie du berceau, ce qui pose des problèmes de connexion et de propreté des contacts, non protégés.

D'autre part, pour réduire l'encombrement des postes téléphoniques et améliorer leur fiabilité, les divers composants électriques et électroniques nécessaires au fonctionnement de ces postes sont actuellement généralement montés sur des circuits imprimés placés dans le socle. Ainsi, logiquement, on a été amené à utiliser des commutateurs de prise de ligne montables sur circuit imprimé et l'actionnement de la touche de détection de combiné entraîne, par l'intermédiaire d'éventuels leviers intermédiaires, le basculement du commutateur.

Du fait du positionnement du commutateur sur un circuit imprimé, apparaissent diverses contraintes. En effet, la transmission du mouvement entre la touche et le commutateur disposé sur le circuit imprimé nécessite un positionnement relatif déterminé entre cette touche et ce circuit imprimé et impose une contrainte sur le placement du commutateur sur le circuit imprimé, si l'on veut obtenir un actionnement mécanique simple et fiable. D'autre part, la partie de la touche qui émerge du socle du poste téléphonique doit être en bonne harmonie esthétique avec l'aspect général de ce poste, ce qui oblige fréquemment à utiliser des matériaux de même qualité et de même couleur que le reste de la carcasse du socle. Toutefois, un tel matériau ne présente pas nécessairement les caractéristiques mécaniques souhaitables pour la transmission du déplacement vers le commutateur. On a donc parfois été amené à incorporer des pièces supplémentaires de renfort ou de transmission qui augmentent le prix de revient final du produit.

Ainsi, un objet de la présente invention est de prévoir un dispositif de détection du décrochement d'un combiné téléphonique assurant une plus grande souplesse dans les choix possibles de positionnement des divers composants du poste téléphonique.

Un autre objet de la présente invention est de prévoir un tel dispositif qui soit compact et robuste.

Un autre objet de la présente invention est de prévoir un tel dispositif qui soit particulièrement simple à assembler et à mettre en place.

Pour atteindre ces objets, la présente invention prévoit un dispositif pré-assemblable avant montage dans le socle d'un poste téléphonique. Ce dispositif comprend une touche permettant de détecter le décrochement du combiné solidaire d'une plaque montée à rotation sur un axe, rappelée en position décroché par un ressort, et portant un commutateur à bouton-poussoir. Une fois le dispositif monté dans le socle, le bouton-poussoir vient porter sur une partie de la carcasse du socle pour amener le commutateur à changer d'état quand la touche est actionnée et que la plaque bascule d'une position à une autre.

Plus particulièrement, la présente invention prévoit un dispositif de détection du décrochement d'un combiné téléphonique du socle d'un poste téléphonique, comprenant : une pièce allongée munie de tétons permettant son pivotement autour d'un axe longitudinal ; une touche constituée d'un prolongement latéral de ladite pièce, et positionnée pour faire saillie à travers la paroi supérieure du socle en position relevée ; un ressort de rappel pour solliciter ladite touche en position relevée ; et un commutateur à bouton-poussoir monté sur ladite pièce dont le bouton glisse sur une surface interne du socle pour passer d'un premier état à un deuxième état quand le combiné est décroché et raccroché.

Selon un mode de réalisation de la présente invention, la pièce allongée comprend une structure pour recevoir le commutateur et le ressort de rappel l'un en dessous de l'autre, et des moyens pour bloquer le ressort de rappel quand le dispositif n'est pas monté dans le poste.

Selon un mode de réalisation de la présente invention, l'axe de pivotement est excentré par rapport à la pièce allongée, le commutateur et le ressort étant du même côté de cet axe que la touche.

Ces objets, caractéristiques et avantages ainsi que d'autres de la présente invention seront exposés plus en détail dans la description suivante de modes de réalisation particuliers faite en relation avec les figures jointes parmi lesquelles :

la figure 1 est une vue de face schématique, partiellement en coupe, d'un poste téléphonique incorporant un dispositif selon la présente invention ;

la figure 2 est une vue de côté schématique partiellement en coupe d'un poste téléphonique incorporant un dispositif selon la présente invention ;

la figure 3 est une vue en perspective schématique d'un dispositif selon la présente invention ;

La figure 4 est une vue de côté schématique partielle d'un dispositif selon la présente invention ;

la figure 5 est une vue de face schématique partielle et agrandie d'un dispositif selon la présente invention ; et

les figures 6 et 7 sont des vues de face schématiques partielles illustrant le fonctionnement du dispositif selon la présente invention.

On notera que ces figures sont relativement schématiques et que leurs divers éléments ne sont pas tracés à l'échelle ni à l'intérieur d'une figure ni d'une figure à l'autre. En outre, les formes des pièces pourront être modifiées pour autant que leurs fonctions soient maintenues comme cela sera exposé ci-après.

Certaines de ces figures ne seront pas décrites en détail individuellement mais les mêmes références sont utilisées dans ces diverses figures pour désigner des pièces ou des parties de pièces identiques ou analogues.

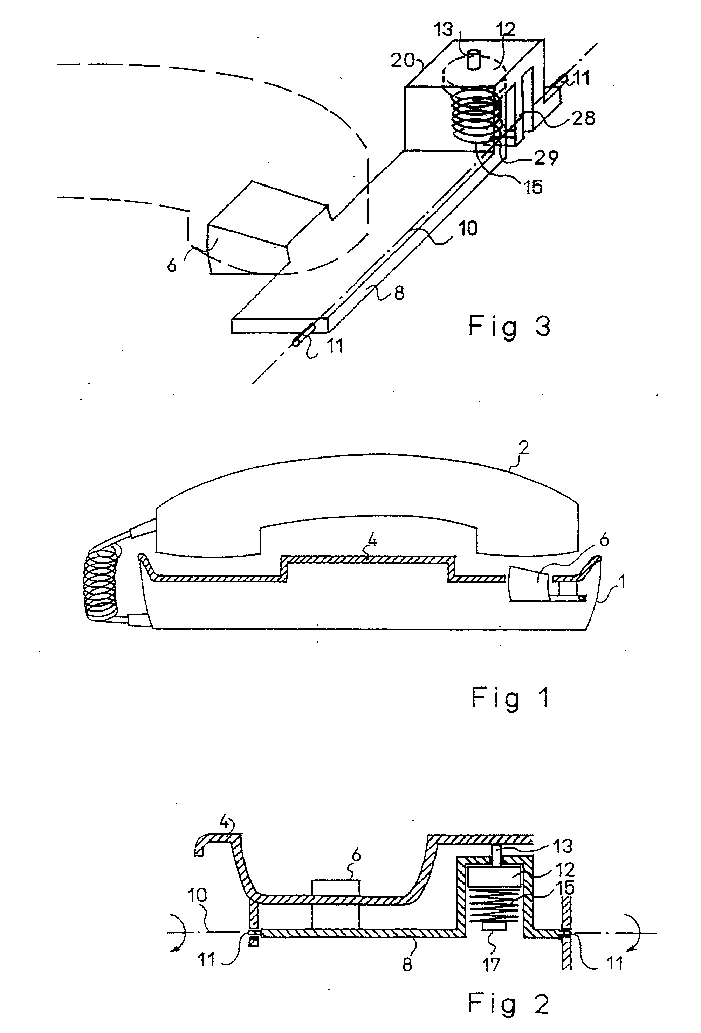

La figure 1 représente un poste téléphonique comprenant un socle 1 et un combiné téléphonique 2 représenté en position soulevée et normalement destiné à venir se poser dans un berceau ménagé dans la paroi supérieure 4 du socle. Une touche 6, sollicitée en position relevée par un ressort, traverse une ouverture dans cette paroi supérieure et est susceptible d'être actionnée par le poids du combiné. C'est la structure et le montage de cette touche en relation avec un commutateur de prise de ligne qui font l'objet de la présente invention et qui seront décrits plus en détail ci-après.

La figure 2 représente une vue de côté partiellement en coupe correspondant à la figure 1, dans laquelle on peut voir latéralement le berceau formé dans la paroi supérieure 4 du socle et la touche 6 décrite précédemment. Cette touche 6 constitue le prolongement latéral d'une plaque 8 destinée à être montée dans le socle de façon à pouvoir pivoter autour d'un axe 10 défini par des tétons 11 par suite d'un actionnement de la touche. Sur cette pièce 8 sont montés un commutateur 12 à bouton-poussoir 13 et un ressort de rappel 15 s'appuyant sur une nervure 17 de la paroi du socle du poste téléphonique.

La figure 3 représente un mode de réalisation schématique d'un dispositif selon l'invention assemblé avant montage dans le socle d'un poste téléphonique. La touche 6 est solidaire d'une plaque 8 munie à ses extrémités longitudinales de tétons 11 définissant un axe de rotation 10 du côté de la plaque 8 opposé à la touche 6 pour permettre le pivotement de l'ensemble constitué par la touche 6 et la plaque 8. Vers une extrémité de la plaque, et solidairement à celle-ci, est prévue une structure 20 permettant de maintenir un commutateur à bouton-poussoir 12 dont le bouton 13 fait saillie vers l'extérieur du dispositif. Comme le montrent les figures 2, 4, 6 et 7, une fois le dispositif monté dans le socle, le bouton-poussoir peut prendre un état enfoncé, en appui contre une partie 21 de la paroi supérieure 4, ou ressortir quand la touche 6 est pressée.

Selon un mode de réalisation de l'invention, la structure 20 permet également de contenir un ressort de rappel 15. Ce ressort prend appui contre la face inférieure (opposée au bouton-poussoir) du commutateur 12 et assure ainsi le blocage du commutateur, et est destiné, une fois monté dans le socle, à s'appuyer sur une nervure de ce socle pour assurer sa fonction de rappel.

Pour faciliter l'assemblage du dispositif selon l'invention avant son montage dans le socle du poste téléphonique, la structure 20 comprend des languettes souples 28 coudées vers l'intérieur à leurs extrémités inférieures 29 permettant l'insertion du commutateur et du ressort et assurant le blocage de ces deux pièces une fois le ressort mis en place.

De préférence, l'ensemble de la pièce illustrée en figure 3 est réalisé en matière plastique moulée, cette matière plastique ayant une souplesse suffisante pour permettre l'écartement et le resserrement des languettes 28. Comme cela est classique, la pièce n'aura en fait pas la forme simplifiée illustrée en figure 3 mais sera munie de diverses nervures de renfort et d'encoches permettant le passage éventuel d'autres pièces.

Une fois le dispositif selon l'invention assemblé, il est mis en place dans le poste téléphonique de sorte que les tétons 11 pénètrent dans des logements formant paliers et que le ressort 15 vient s'appuyer sur une nervure 17 solidaire de la paroi inférieure du socle du poste téléphonique. Cette nervure est disposée pour pénétrer entre les extrémités coudées 29 des languettes 28 et comprimer légèrement le ressort 15 qui ne prend alors plus appui sur ces extrémités 29 qui servaient seulement au préassemblage du dispositif selon l'invention.

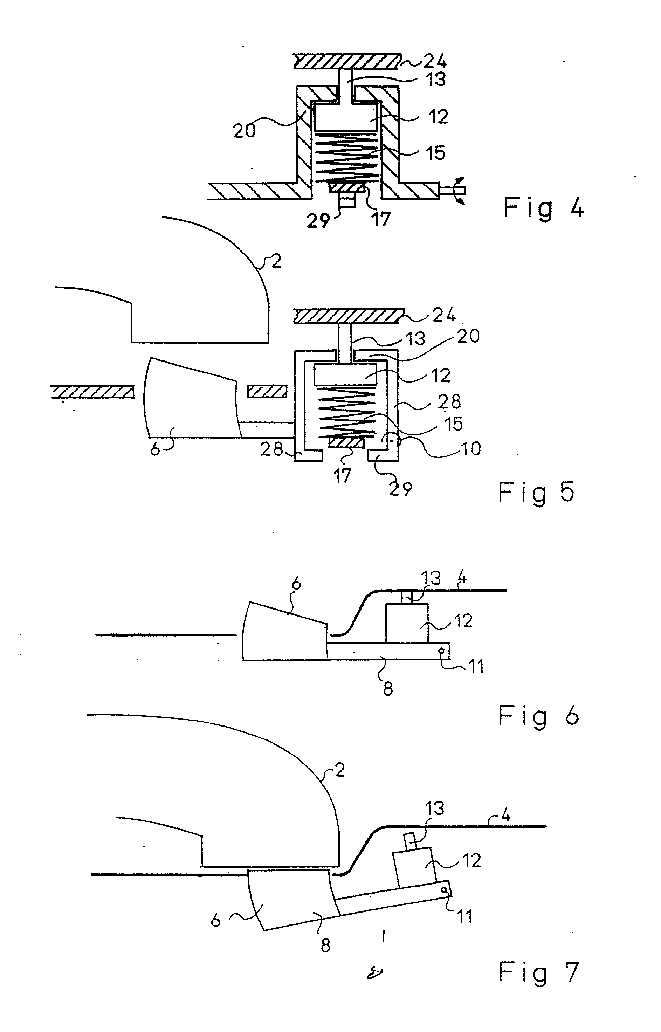

La représentation de la figure 5 est fortement simplifiée. Elle est destinée à mieux montrer les languettes 28.

Les figures 6 et 7 se comprendront bien à partir des explications précédentes. Elles sont destinées à mieux montrer le déplacement du commutateur à bouton-poussoir quand la touche 6 est libre ou pressée, respectivement.

Ainsi, un ensemble simple, plat et peu encombrant, permet d'actionner directement un commutateur de prise de ligne à partir du mouvement d'une touche recevant un combiné téléphonique, le commutateur étant directement solidaire mécaniquement de la touche. Ce commutateur est bien entendu muni de cosses et de fils de sortie destinés à le relier aux composants électriques, généralement situés sur une carte de circuit imprimé, assurant les diverses fonctions du poste téléphonique. Bien que la fonction principale de ce commutateur soit une fonction de prise de ligne, il est bien connu que ce commutateur permet généralement de réaliser d'autres fonctions électriques auxiliaires et qu'il s'agit donc généralement d'un commutateur multicontact.

Un avantage de la présente invention est de permettre un positionnement des circuits imprimés indépendamment du positionnement de la touche de combiné.

Selon un autre avantage de la présente invention, le dispositif détecteur de combiné est particulièrement simple puisque ses éléments peuvent être pré-assemblés avant montage dans le socle d'un poste téléphonique adapté.

**Revendications**

1. Dispositif de détection du décrochement d'un combiné téléphonique du socle d'un poste téléphonique, comprenant :
une pièce allongée (8) munie de tétons (11) permettant son pivotement autour d'un axe longitudinal (10) ;
une touche (6), constituée d'un prolongement latéral de ladite pièce, et positionnée pour faire saillie à travers la paroi supérieure du socle en position relevée ;
un ressort de rappel (15) pour solliciter ladite touche en position relevée ; et
caractérisé en ce qu'il comprend en outre un commutateur à bouton-poussoir (12) monté sur ladite pièce dont le bouton (13) glisse sur une surface interne du socle pour passer d'un premier état à un deuxième état quand le combiné est décroché et raccroché.

2. Dispositif selon la revendication 1, caractérisé en ce que la pièce (8) comprend une structure (20) pour recevoir le commutateur (12) et le ressort de rappel (15) l'un en dessous de l'autre, et des moyens (28, 29) pour bloquer le ressort de rappel quand ledit dispositif n'est pas monté dans le poste.

3. Dispositif selon la revendication 1, caractérisé en ce que ledit axe de pivotement est excentré par rapport à ladite pièce (8), le commutateur (12) et le ressort (15) étant du même côté dudit axe que la touche (6).

4. Dispositif selon la revendication 1, caractérisé en ce que le commutateur (12) est un commutateur multicontact.

Fig 3

Fig 1

Fig 2

Fig 4

Fig 5

Fig 6

Fig 7

6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 838 856 (WASZCZUK)<br>* Colonne 2, ligne 38 - colonne 3, ligne 50; figures 1-4 *<br>— — — | 1,3 | H 04 M 1/08 |
| A | GB-A-2 207 324 (VIDLER)<br>* Page 2, ligne 4 - page 3, ligne 1; figures 1-6 *<br>— — — | 1,4 | |
| A | GB-A-2 201 063 (BRITISH TELECOMMUNICATIONS)<br>* Page 5, lignes 8-29; figure 2 *<br>— — — | 1,4 | |
| A | PATENT ABSTRACTS OF JAPAN, vol. 2, no. 73 (E-037)[2798], 7 juin 1978;<br>& JP-A-53 038 907 (NIPPON DENWA KOSHA) 10-04-1978<br>* Abrégé; figure *<br>— — — — — | 1 | |

**DOMAINES TECHNIQUES RECHERCHES (Int. Cl.5)**

H 04 M

Le présent rapport de recherche a été établi pour toutes les revendications

| Lieu de la recherche | Date d'achèvement de la recherche | Examinateur |
|---|---|---|
| La Haye | 04 février 91 | DELANGUE P.C.J.G. |